# EUROPEAN PATENT APPLICATION

(11) **EP 4 832 327 A1**
(43) Date of publication of application: **28.10.2026**
(21) Application number: 24908378.3
(22) Date of filing: 19.12.2024
(51) Int. Cl.: H02M 3/155, H02M 1/00, H02M 1/08

(54) **MULTI-OUTPUT BUCK-BOOST CONVERTER USING SINGLE INDUCTOR AND CONTROL METHOD THEREOF**

(30) Priority: 20.12.2023 KR 20230187277; 18.12.2024 KR 20240189814
(71) Applicant: Lucid Microsystems Pte Ltd., Suwon-si Gyeonggi-do 16512 (KR)
(72) Inventor: LEE, Kisun, Suwon-si Gyeonggi-do 16512 (KR); SONG, Kyung Hoon, Suwon-si Gyeonggi-do 16512 (KR)
(74) Representative: patcare Patentanwälte Partnerschaft mbB
(86) International application number: PCT/KR2024/097182
(87) International publication number: WO 2025/136074

(57) **Abstract**

One embodiment provides a buck-boost converter comprising: a power stage which includes an inductor disposed between a first node and a second node, a first switch that controls connection between the first node and a node at which an input voltage is formed, a second switch that controls connection between the second node and a node at which a first output voltage is formed, a third switch that controls connection between the first node and a node at which a second output voltage is formed, and a fourth switch that controls connection between the second node and a reference potential node; and a controller that determines an on-time of the first switch on the basis of the second output voltage, determines an on-time of the second switch on the basis of the current of the inductor, determines an on-time of the third switch on the basis of the first output voltage, and controls on/off operations of the switches such that the on-times of the first switch and the third switch do not overlap and the on-times of the second switch and the fourth switch do not overlap.

## Description

### Technical Field

The present disclosure relates to a converter and a control method thereof.

### Background Art

A converter, which is a device to convert electric power, can receive one input voltage and generate one output voltage. However, there may be a case where one or more output voltages are necessary depending on the type of application. For example, there are many cases where respective components require different voltages in an electronic apparatus. A microprocessor, a memory, an analog circuit, etc. may have different optimum operating voltages. In order to supply appropriate amounts of power to such components, a converter may provide multiple output voltages.

A converter for multiple output voltages may simultaneously generate multiple different voltages based on one input voltage. It may be embodied in the form of a switching mode power supply (SMPS), and respective output voltages may be designed to satisfy different power requirements. For example, such a converter may be used for supplying power to a complex electronic apparatus that requires various voltages from a main power source.

A converter for multiple output voltages may convert power using an inductor and a switch. Such a converter may have a configuration in which an input voltage is adjusted to appropriate levels to generate multiple output voltages. An inductor may be used for converting voltages by storing energy through a current and discharging the energy as necessary. In this process, a switching element may control the flow of energy.

A switch (mainly a metal-oxide-semiconductor field-effect transistor (MOSFET)) may generate desired output voltages by adjusting a current of an inductor through operations of being rapidly turned on and then off. The on/off timing of a switching element may be determined by a control circuit, which enables control such that an output voltage may maintain a target value. A switching frequency and a duty cycle may be elements that influence an output voltage and an inductor current and enable the individual adjustment of each output voltage.

A converter to provide multiple output voltages may use a separate inductor for every output voltage. Such a method of using a separate inductor for every output voltage may minimize electrical interference between outputs to secure the independence of each output voltage. Since each output voltage is controlled by a separate inductor, it is possible to independently respond to different voltage requirements or load changes of each output. However, such a method that requires a separate inductor for each output may increase the number of required components for a circuit and complicate the entire structure of a circuit. This may increase costs for design and manufacture and increase the size of a circuit due to the space that inductors occupy.

### DETAILED DESCRIPTION OF THE INVENTION

### Technical Problem

Based on the foregoing, an aspect of the present disclosure is to provide a technology for a converter to generate multiple output voltages using a single inductor. Another aspect of the present disclosure is to provide a technology for controlling a converter that generates multiple output voltages using a single inductor.

### Technical Solution

To this end, an embodiment of the present disclosure provides a buck-boost converter comprising: a power stage configured to include an inductor that is disposed between a first node and a second node, a first switch that controls connection between the first node and a node where an input voltage is generated, a second switch that controls connection between the second node and a node where a first output voltage is generated, a third switch that controls connection between the first node and a node where a second output voltage is generated, and a fourth switch that controls connection between the second node and a reference potential node; and a controller configured to determine an on-time of the first switch based on the second output voltage, to determine an on-time of the second switch based on a current of the inductor, to determine an on-time of the third switch based on the first output voltage, and to control on and off states of the switches such that an on-period of the first switch and an on-period of the third switch do not overlap, and an on-period of the second switch and an on-period of the fourth switch do not overlap.

The controller may determine an off-time of the third switch and an off-time of the fourth switch based on a zero current detection (ZCD) signal for a current of the inductor.

The first output voltage may have a potential higher than that of the second output voltage.

The first output voltage may have a potential higher than that of the reference potential node, and the second output voltage may have a potential lower than that of the reference potential node.

The power stage may comprise only a single inductor and four switches.

The controller may generate a first clock by comparing an error signal, which is generated by a difference between the second output voltage and a second output reference voltage, with a triangle wave, and may turn on the first switch according to an edge signal of the first clock.

The controller may turn on the second switch when the current level of the inductor reaches a predetermined value.

The controller may generate a third clock by comparing an error signal, which is generated by a difference between the first output voltage and a first output reference voltage, with a triangle wave, and may turn on the third switch according to an edge signal of the third clock.

The controller may generate a first signal by comparing an error signal, which is generated by a difference between the first output voltage and the first output reference voltage, with a triangle wave, generate a second signal when the current level of the inductor reaches a predetermined value, generate a third clock by performing an OR operation on the first signal and the second signal, and turn on the third switch according to an edge signal of the third clock.

During one switching period, the first switch, the second switch, and the third switch may be turned on in that order.

Another embodiment of the present disclosure provides a buck-boost converter comprising: a power stage configured to include an inductor disposed between a first node and a second node, a first switch that controls connection between the first node and an input terminal, a second switch that controls connection between the second node and a first output terminal, a third switch that controls connection between the first node and a second output terminal, and a fourth switch that controls connection between the second node and a reference potential node, a first load disposed between the first output terminal and the second output terminal, and a second load disposed between the first output terminal and the reference potential node; and a controller configured, in one mode, to determine an on-time of the first switch and an on-time of the second switch based on a voltage of the second load, to determine an on-time of the third switch and an on-time of the fourth switch based on a voltage of the first load or a current of the inductor, and to control on and off states of the switches such that an on-period of the first switch and an on-period of the third switch do not overlap, and an on-period of the second switch and an on-period of the fourth switch do not overlap.

The controller may determine an off-time of the third switch and an off-time of the fourth switch based on a zero current detection (ZCD) signal for a current of the inductor.

The controller may operate in the one mode when a current of the second load is N times (N is a natural number equal to or greater than 2) higher than a current of the first load.

The first output terminal may have a potential higher than that of the reference potential node, and the second output terminal may have a potential lower than that of the reference potential node.

The controller may generate a fourth clock by comparing an error signal, which is generated by a difference between a voltage of the second load and a second load reference voltage, with a triangle wave, and may turn on the first switch and the second switch according to an edge signal of the fourth clock.

The controller may generate a first signal by comparing an error signal, which is generated by a difference between a voltage of the first load and a first load reference voltage, with a triangle wave, generate a second signal when the current level of the inductor reaches a predetermined value, generate a third clock by performing an OR operation on the first signal and the second signal, and turn on the third switch and the fourth switch according to an edge signal of the third clock.

In another mode, the controller may determine the on-time of the first switch based on a voltage of the second output terminal, determine the on-time of the second switch based on a current of the inductor, determine the on-time of the third switch based on a voltage of the first output terminal, and control on and off states of the switches such that the on-period of the first switch and the on-period of the third switch do not overlap, and the on-period of the second switch and the on-period of the fourth switch do not overlap.

The controller may determine switching between the one mode and the other mode according to a difference between currents or a difference in power consumed by the first load and the second load.

In the one mode, the first switch and the second switch may operate in synchronization with each other, and the third switch and the fourth switch may operate in synchronization with each other.

Still another embodiment of the present disclosure provides a method for controlling a converter, which comprises an inductor disposed between a first node and a second node, a first switch that controls connection between the first node and a node where an input voltage is generated, a second switch that controls connection between the second node and a node where a first output voltage is generated, a third switch that controls connection between the first node and a node where a second output voltage is generated, and a fourth switch that controls connection between the second node and a reference potential node, comprising the steps of: determining an on-time of the first switch based on the second output voltage; determining an on-time of the second switch based on a current of the inductor; determining an on-time of the third switch based on the first output voltage; and controlling on and off states of the switches such that an on-period of the first switch and an on-period of the third switch do not overlap, and an on-period of the second switch and an on-period of the fourth switch do not overlap.

### Effects of the Invention

As described above, the present disclosure enables the configuration of a converter that generates multiple output voltages using a single inductor. The present disclosure also enables a reduction in the size of a solution including a converter and an improvement in the price competitiveness of the solution.

### BRIEF DESCRIPTION OF THE DRAWINGS

FIG. 1 is a configuration diagram of an electric power apparatus according to an embodiment.
FIG. 2 is a circuit diagram of a power stage according to an embodiment.
FIG. 3 is a configuration diagram of a controller according to an embodiment.
FIG. 4 is a diagram illustrating waveforms of clocks, switches, and inductor current when a converter operates in a discontinuous current mode.
FIG. 5 to FIG. 8 are diagrams illustrating the states of respective switches and current paths at respective steps in an example shown in FIG. 4.
FIG. 9 is a diagram illustrating waveforms of clocks, switches, and inductor current when a converter operates in a continuous current mode.
FIG. 10 is a configuration diagram of an electric power apparatus according to another embodiment.
FIG. 11 is a configuration diagram of a controller according to another embodiment.
FIG. 12 is a diagram illustrating waveforms of clocks, switches, and inductor current when a converter according to another embodiment operates.
FIG. 13 and FIG. 14 are diagrams illustrating the states of respective switches and current paths at respective steps in an example shown in FIG. 12.
FIG. 15 is a flow diagram of a method for controlling a converter according to an embodiment.

### Mode for Implementing the Invention

Hereinafter, some embodiments of the present disclosure will be described in detail with reference to the accompanying drawings. With regard to the reference numerals of the components of the respective drawings, it should be noted that the same reference numerals are assigned to the same components even though they are shown in different drawings. In addition, in describing the present disclosure, a detailed description of a well-known configuration or function related to the present disclosure, which may obscure the subject matter of the present disclosure, will be omitted.

In addition, terms, such as "1st", "2nd", "A", "B", "(a)", "(b)", or the like, may be used in describing the components of the present disclosure. These terms are intended only for distinguishing a corresponding component from other components, and the nature, order, or sequence of the corresponding component is not limited to the terms. In the case where a component is described as being "coupled", "combined", or "connected" to another component, it should be understood that the corresponding component may be directly coupled or connected to another component or that the corresponding component may also be "coupled", "combined", or "connected" to the component via another component provided therebetween.

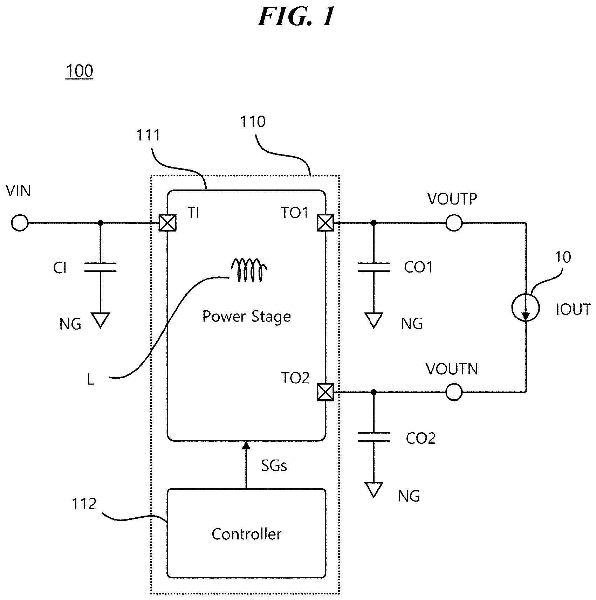

FIG. 1 is a configuration diagram of an electric power apparatus according to an embodiment.

Referring to FIG. 1, an electric power apparatus 100 may comprise a converter 110, peripheral components, and a load.

The converter 110 may convert an input voltage VIN supplied through an input terminal TI into a first output voltage VOUTP to supply it to a first output terminal TO1, and convert the input voltage VIN into a second output voltage VOUTN to supply it to a second output terminal TO2.

Capacitors CI, CO1, CO2 may be connected respectively to the terminal TI, TO1, TO2. For example, an input capacitor CI may be connected to the input terminal TI, a first output capacitor CO1 may be connected to the first output terminal TO1, and a second output capacitor CO2 may be connected to the second output terminal TO2. The input capacitor CI may be connected to the input terminal TI on one side and to a reference potential node NG on the other side. The first output capacitor CO1 may be connected to the first output terminal TO1 on one side and to the reference potential node NG on the other side. The second output capacitor CO2 may be connected to the second output terminal TO2 on one side and to the reference potential node NG on the other side.

The converter 110 may comprise a power stage 111 and a controller 112.

In the power stage 111, a plurality of switches - for example, four switches - may be arranged. The power stage 111 may further comprise an inductor L. In this case, one switch may be formed of one switching element or a plurality of switching elements arranged in series or in parallel. A single device that controls connection or disconnection of a path for electric power may be referred to as a single switch. One inductor may be formed as one passive element or a plurality of sub-inductors arranged in series or in parallel. Hereinafter, for the convenience of description, description will be provided regarding an embodiment in which one switch is formed of one switching element - one MOSFET element -, and one inductor is formed as one passive element. However, the present disclosure is not limited thereto.

A switch may be a metal-oxide-semiconductor field-effect transistor (MOSFET), an insulated gate bipolar transistor (IGBT), a bipolar junction transistor (BJT), a junction field-effect transistor (JFET), or the like.

A MOSFET (Metal-Oxide-Semiconductor Field-Effect Transistor) is an element in which a voltage is applied between the gate and the source to control a current between the drain and the source. The MOSFET is a voltage-controlled element, in which the conductivity state of a channel may be adjusted depending on a voltage applied to the gate. A drain-source current may be determined by a gate voltage. The MOSFET has excellent switching characteristics, and thus, may be frequently used in switching applications.

An IGBT (Insulated Gate Bipolar Transistor) is an element having characteristics of both a MOSFET and a BJT, in which a voltage is applied between the gate and the emitter to control a collector-emitter current. The IGBT, which may handle high voltages, may be formed to have both input characteristics of a MOSFET and output characteristics of a BJT. Such characteristics enable the IGBT to be used in applications requiring high electric power density.

A BJT (Bipolar Junction Transistor), which is an element comprising three terminals: a base, a collector, and an emitter, may control a current between the collector and the emitter by applying a base current. The BJT is a current-controlled element, in which a collector current may be amplified by a base current. Such amplification characteristics enable the BJT to be used in a current amplifier or similar applications and to handle high currents in specific applications.

A JFET (Junction Field-Effect Transistor) is an element in which a voltage is applied between the gate and the source to control a current between the drain and the source. The JFET may control current flow in a channel by means of a PN junction. The current may be controlled by a gate voltage applied to the channel. This element may be classified as a voltage-controlled element. Because of its low-noise characteristics, it may be applied to specific analog circuits.

Hereinafter, for the convenience of description, description will be provided regarding an embodiment in which a switch is formed of a MOSFET element, but the present disclosure is not limited thereto.

The controller may control the on/off states of the respective switches by transmitting gate control signals SGs to the power stage 111. For example, the controller 112 may transmit a first gate signal to a first switch to control the on/off state of the first switch, and may transmit a fourth gate signal to a fourth switch to control the on/off state of the fourth switch.

The controller 112 may sense an input voltage VIN, a first output voltage VOUTP, a second output voltage VOUTN, or a current of the inductor and utilize them to generate gate control signals SGs. In such control, control blocks, each comprising a voltage control loop and/or a current control loop, which are generally utilized in converters, may be utilized.

To each of the first output terminal TO1 and the second output terminal TO2, a load may be connected. Independent loads may be connected respectively to the first output terminal TO1 and the second output terminal TO2, or a single load 10 may be connected between the first output terminal TO1 and the second output terminal TO2, as shown in FIG. 1.

In this case, one side of the load 10 may be connected to the first output terminal TO1 and the other side may be connected to the second output terminal TO2. A first output voltage VOUTP may be generated on one side of the load 10 and a second output voltage VOUTN may be generated on the other side.

A potential of the first output voltage VOUTP may be higher than that of the second output voltage VOUTN. The first output voltage VOUTP may be positive, and the second output voltage VOUTN may be negative. Here, the first output voltage VOUTP may have a potential higher than that of a reference potential node NG, and the second output voltage VOUTN may have a potential lower than that of a reference potential node NG. The potential at the reference potential node NG may be 0V, which is identical to that of ground; however, the potential may somewhat differ depending on embodiments.

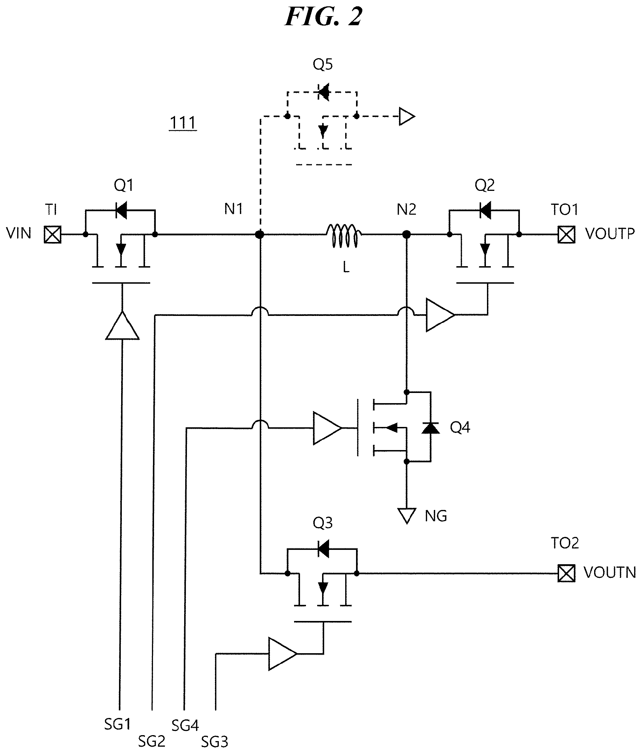

FIG. 2 is a circuit diagram of a power stage according to an embodiment.

Referring to FIG. 2, the inductor L may be disposed between a first node N1 and a second node N2. A current that flows from the first node N1 to the second node N2 may pass through the inductor. A voltage generated at the first node N1 may be a voltage on one side of the inductor L and a voltage generated at the second node N2 may be a voltage on the other side of the inductor L. Energy stored in the inductor L may be determined by a difference between the voltages on one side and the other side of the inductor L.

Between a node where an input voltage VIN is generated - here, the input terminal TI - and the first node N1, a first switch Q1 may be disposed. The first switch Q1 may control the connection between the input terminal TI and the first node N1. When the first switch Q1 is turned on, the input terminal TI and the first node N1 are connected, and the input voltage VIN generated at the input terminal TI may be supplied to the first node N1.

Between a node where a first output voltage VOUTP is generated - here, the first output terminal TO1 - and the second node N2, a second switch Q2 may be disposed. The second switch Q2 may control the connection between the first output terminal TO1 and the second node N2. When the second switch Q2 is turned on, the first output terminal TO1 and the second node N2 are connected, and the first output voltage VOUTP generated at the first output terminal TO1 may be supplied to the second node N2.

Between a node where a second output voltage VOUTN is generated - here, the second output terminal TO2 - and the first node N1, a third switch Q3 may be disposed. The third switch Q3 may control the connection between the second output terminal TO2 and the first node N1. When the third switch Q3 is turned on, the second output terminal TO2 and the first node N1 are connected, and the second output voltage VOUTN generated at the second output terminal TO2 may be supplied to the first node N1.

Between the second node N2 and the reference potential node NG, a fourth switch Q4 may be disposed. The fourth switch Q4 may control the connection between the second node N2 and the reference potential node NG. When the fourth switch Q4 is turned on, a voltage with a reference potential may be generated at the second node N2.

In case of general converters, a fifth switch Q5 that controls the connection between the first node N1 and the reference potential node is not included in the power stage 111 according to an embodiment. In the power stage 111 according to an embodiment, only a single inductor L and four switches Q1, Q2, Q3, Q4 may be disposed.

The switches Q1, Q2, Q3, Q4 may be connected respectively to gate drivers. To the gate drivers, gate control signals SG1, SG2, SG3, SG4 may be supplied. The first switch Q1 may be turned on or off according to a first gate control signal SG1, the second switch Q2 may be turned on or off according to a second gate control signal SG2, the third switch Q3 may be turned on or off according to a third gate control signal SG3, and the fourth switch Q4 may be turned on or off according to a fourth gate control signal SG4.

The gate control signals SG1, SG2, SG3, SG4 may be generated by the controller.

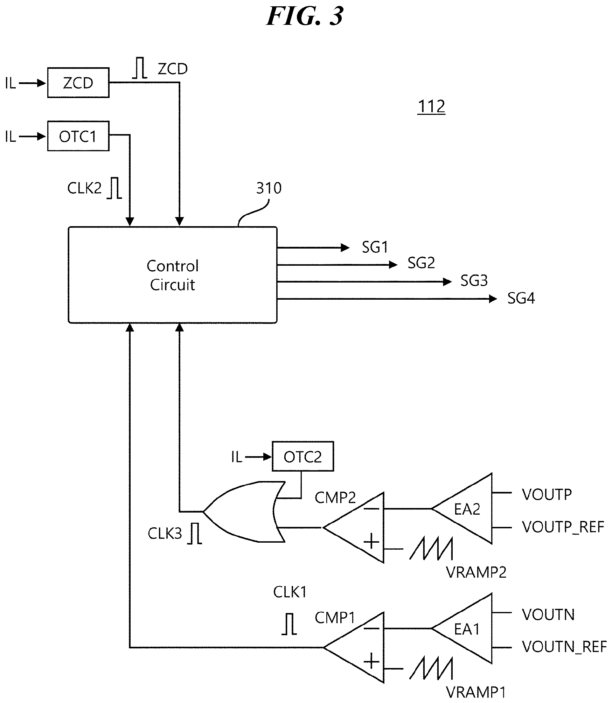

FIG. 3 is a configuration diagram of a controller according to an embodiment.

Referring to FIG. 3, the controller 112 may comprise a control circuit 310. The control circuit 310 may output the gate control signals SG1, SG2, SG3, SG4.

The control circuit 310 may determine an on-time of the first switch based on the second output voltage VOUTN, may determine an on-time of the second switch based on a current IL of the inductor, and may determine an on-time of the third switch based on the first output voltage VOUTP. The control circuit 310 may control the on/off states of the first switch and the third switch such that their on-periods do not overlap, and may also control the on/off states of the second switch and the fourth switch such that their on-periods do not overlap.

To the control circuit 310, a first clock CLK1, a second clock CLK2, a third clock CLK3, and a zero current detection (ZCD) signal may be supplied. The control circuit 310 may turn on the first switch according to an edge signal - for example, a rising edge signal - of the first clock CLK1, may turn on the second switch according to an edge signal of the second clock CLK2, and may turn on the third switch according to an edge signal of the third clock CLK3.

The controller 112 may comprise a first error amplifier EA1 and a first comparator CMP1, and may generate an error signal that corresponds to a difference between the second output voltage VOUTN and a second output reference voltage VOUTN_REF using the first error amplifier EA1. Then, the controller 112 may compare the error signal with a triangle wave VRAMP1 using the first comparator CMP1 to generate the first clock CLK1, and may transfer the first clock CLK1 to the control circuit 310.

The controller 112 may comprise a second error amplifier EA2 and a second comparator CMP2, and may generate an error signal that corresponds to a difference between the first output voltage VOUTP and a first output reference voltage VOUTP_REF using the second error amplifier EA2. Then, the controller 112 may compare the error signal with a triangle wave VRAMP2 using the second comparator CMP2 to generate the third clock CLK3, and may transfer the third clock CLK3 to the control circuit 310.

The controller 112 may generate the third clock CLK3 by further taking into account the level of the inductor current IL. The controller 112 may generate a first signal by comparing the error signal, generated by the difference between the first output voltage VOUTP and the first output reference voltage VOUTP_REF, with the triangle wave VRAMP2, and may generate a second signal when the level of the inductor current IL reaches a first predetermined value using a second on-time controller OTC2. Then, the controller 112 may generate the third clock CLK3 by performing an OR operation on the first signal and the second signal.

The controller 112 may generate the second clock CLK2 using a first on-time controller OTC1. The first on-time controller OTC1 may generate the second clock CLK2 when the level of the inductor current IL reaches a second predetermined value, and the control circuit 310 may turn on the second switch according to an edge signal - for example, a rising edge signal - of the second clock CLK2.

The controller 112 may comprise a ZCD circuit, and may detect a zero current timing of the inductor current IL using the ZCD circuit. In addition, the controller 112 may generate a ZCD signal ZCD in response to the zero current timing.

The control circuit 310 may determine an off-time of the third switch and an off-time of the fourth switch based on the ZCD signal ZCD for the inductor current IL.

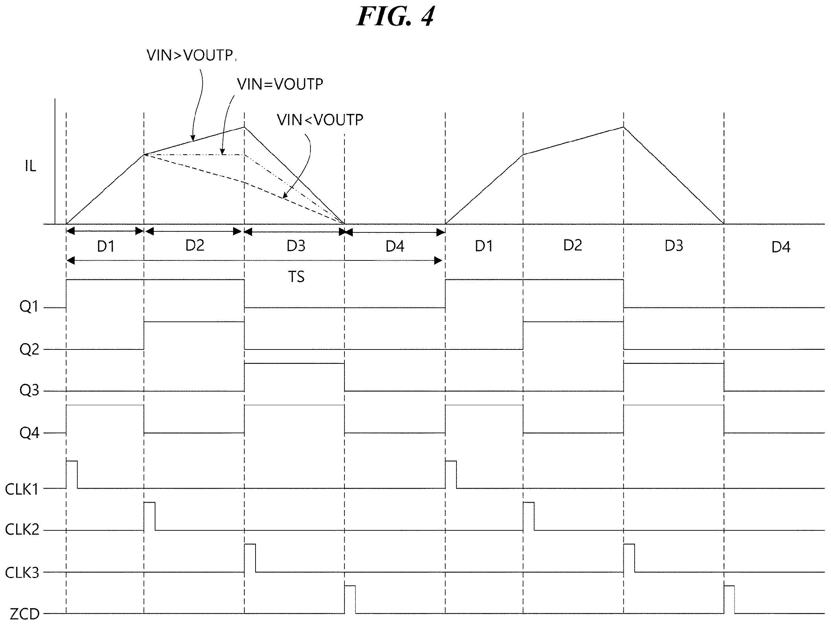

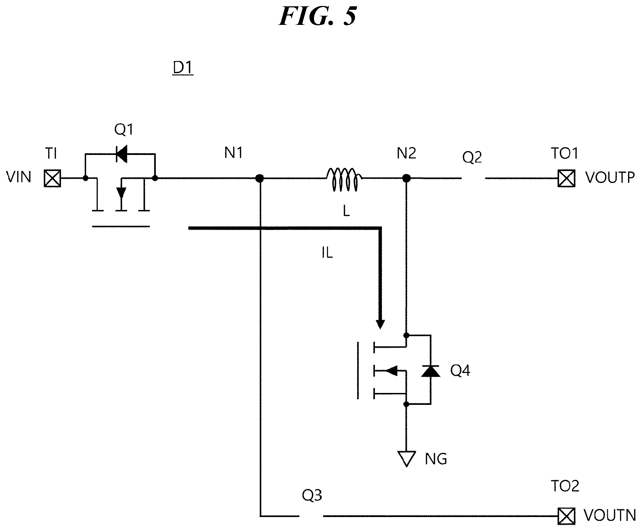

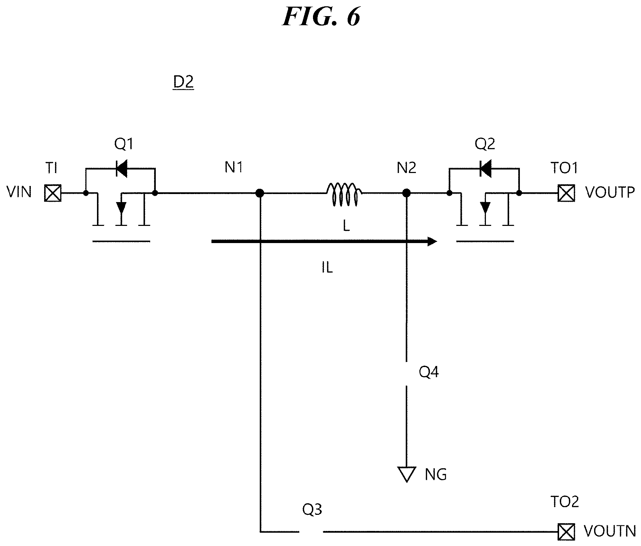

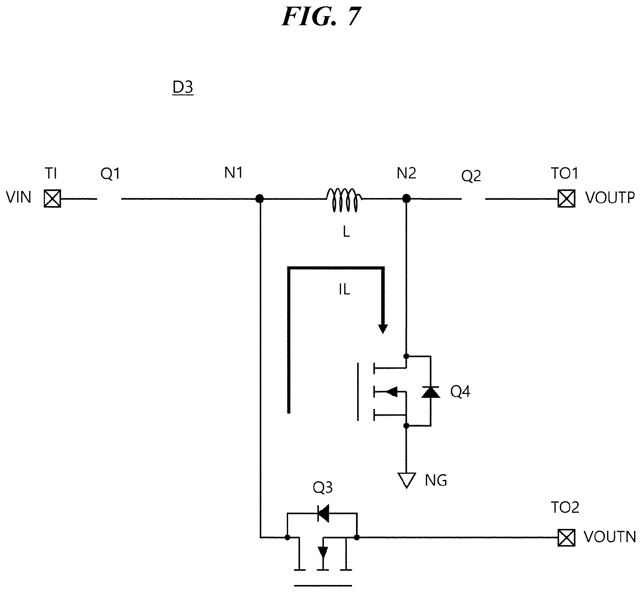

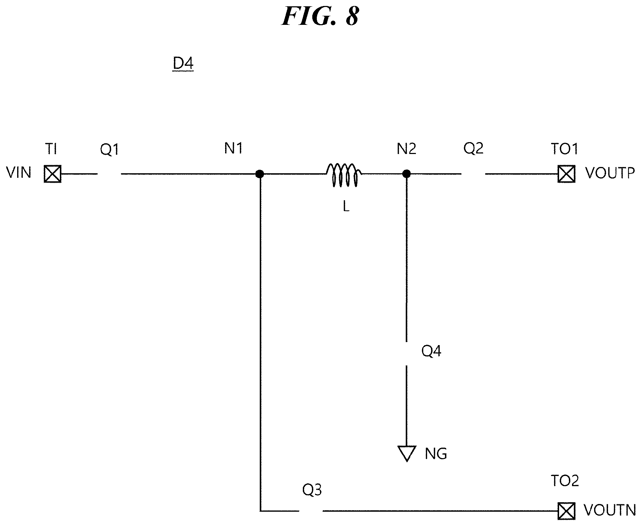

FIG. 4 is a diagram illustrating waveforms of clocks, switches, and inductor current when a converter operates in a discontinuous current mode, and FIG. 5 to FIG. 8 are diagrams illustrating the states of respective switches and current paths at respective steps in an example shown in FIG. 4.

Referring to FIG. 4 to FIG. 8, one switching period TS in the discontinuous current mode may comprise four steps. The inductor current IL may build up in a first step D1, may decrease, be maintained, or increase in a second step D2, and may decrease to the zero level in a third step D3. In a fourth step D4, no current may flow into the inductor.

In one switching period TS, the first switch Q1, the second switch Q2, and the third switch Q3 may be turned on in this order. If defining one switching period TS as starting from the second step D2, the second switch Q2, the third switch Q3, and the first switch Q1 may be turned on in this order.

In the first step D1, the first switch Q1 may be turned on according to a rising edge signal of the first clock CLK1. At this moment, the fourth switch Q4 may also be turned on. The third switch Q3, controlled such that its on-period does not overlap with the on-period of the first switch Q1, may remain in an off state, and the second switch Q2, controlled such that its on-period does not overlap with the on-period of the fourth switch Q4, may remain in an off state.

In the first step D1, an input voltage VIN may be generated at the first node N1, and a reference potential voltage may be generated at the second node N2. Accordingly, energy may be accumulated in the inductor L in the direction from the first node N1 to the second node N2, and the inductor current IL may also flow in the direction from the first node N1 to the second node N2.

In the second step D2, the second switch Q2 may be turned on according to a rising edge signal of the second clock CLK2. At this moment, the fourth switch Q4, which is controlled such that its on-period does not overlap with that of the second switch Q2, may be turned off. The first switch Q1 may remain in an on state and the third switch Q3 may remain in an off state.

In the second step D2, an input voltage VIN may be generated at the first node N1, and a first output voltage VOUTP may be generated at the second node N2. In this case, when the input voltage VIN is higher than the first output voltage VOUTP, the inductor current IL increases; when the input voltage VIN is identical to the first output voltage VOUTP, the inductor current IL is maintained; and when the input voltage VIN is lower than the first output voltage VOUTP, the inductor current IL may decrease.

In the third step D3, the third switch Q3 may be turned on according to a rising edge signal of the third clock CLK3. At this moment, the fourth switch Q4 may also be turned on. The first switch Q1, controlled such that its on-period does not overlap with that of the third switch Q3, may be turned off, and the second switch Q2, controlled such that its on-period does not overlap with that of the fourth switch Q4, may be turned off.

In the third step D3, a second output voltage VOUTN may be generated at the first node N1, and a reference potential voltage may be generated at the second node N2. Accordingly, the inductor current IL may decrease.

In the fourth step D4, the third switch Q3 may be turned off according to the ZCD signal ZCD, and the fourth switch Q4 may also be turned off. The first switch Q1 may remain in an off state, and the second switch Q2 may remain in an off state. In this case, no current may flow into the inductor L.

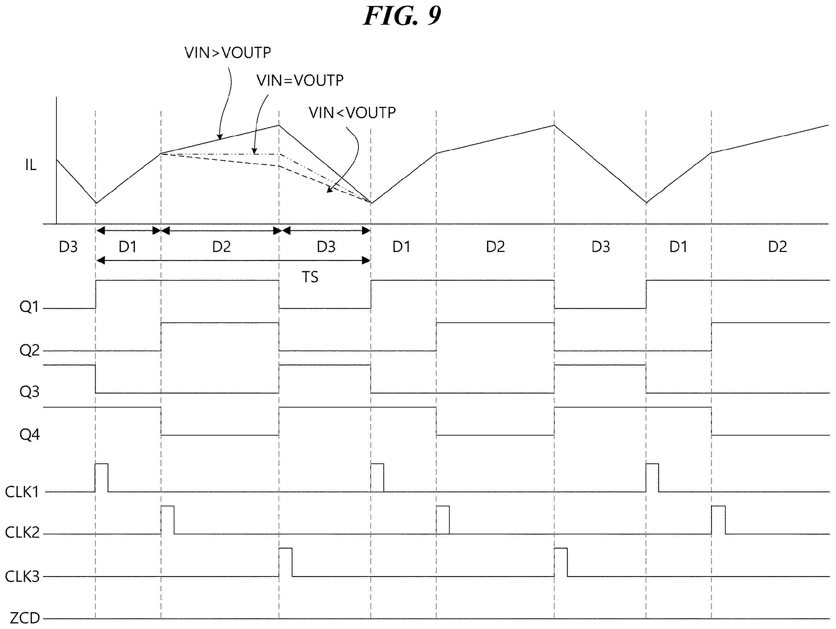

FIG. 9 is a diagram illustrating waveforms of clocks, switches, and inductor current when a converter operates in a continuous current mode.

Referring to FIG. 9, the inductor current IL does not decrease to a level lower than zero in one switching period TS, and thus, the ZCD signal ZCD may not be generated.

In the first step D1, the first switch Q1 may be turned on according to a rising edge signal of the first clock CLK1. The third switch Q3, controlled such that its on-period does not overlap with that of the first switch Q1, may be turned off. The second switch Q2 may remain in an off state, and the fourth switch Q4 may remain in an on state.

In the first step D1, an input voltage VIN may be generated at the first node N1, and a reference potential voltage may be generated at the second node N2. Accordingly, energy may be accumulated in the inductor L in the direction from the first node N1 to the second node N2, and the inductor current IL may also flow in the direction from the first node N1 to the second node N2.

In the second step D2, the second switch Q2 may be turned on according to a rising edge signal of the second clock CLK2. The fourth switch Q4, controlled such that its on-period does not overlap with that of the second switch Q2, may be turned off. The first switch Q1 may remain in an on state, and the third switch Q3 may remain in an off state.

In the second step D2, an input voltage VIN may be generated at the first node N1, and a first output voltage VOUTP may be generated at the second node N2. In this case, when the input voltage VIN is higher than the first output voltage VOUTP, the inductor current IL increases; when the input voltage VIN is identical to the first output voltage VOUTP, the inductor current IL is maintained; and when the input voltage VIN is lower than the first output voltage VOUTP, the inductor current IL may decrease.

In the third step D3, the third switch Q3 may be turned on according to a rising edge signal of the third clock CLK3. At this moment, the fourth switch Q4 may also be turned on. The first switch Q1, controlled such that its on-period does not overlap with that of the third switch Q3, may be turned off, and the second switch Q2, controlled such that its on-period does not overlap with that of the fourth switch Q4, may be turned off.

In the third step D3, a second output voltage VOUTN may be generated at the first node N1, and a reference potential voltage may be generated at the second node N2. Accordingly, the inductor current IL may decrease.

One switching period TS may comprise the first step D1, the second step D2, and the third step D3.

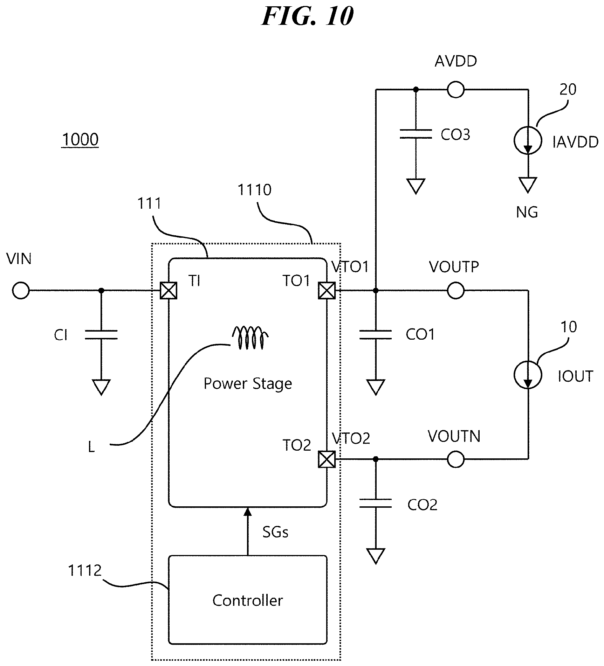

FIG. 10 is a configuration diagram of an electric power apparatus according to another embodiment.

Referring to FIG. 10, an electric power apparatus 1000 may comprise a converter 1110, peripheral components, and a load.

The converter 1110 may convert an input voltage VIN, supplied through an input terminal TI, into a first output terminal voltage VTO1 to supply it to a first output terminal TO1, and may convert the input voltage VIN into a second output terminal voltage VTO2 to supply it to a second output terminal TO2.

To the respective terminals TI, TO1, TO2, capacitors CI, CO1, CO2 may be connected. For example, an input capacitor CI may be connected to the input terminal TI, a first output capacitor CO1 may be connected to the output terminal TO1, and a second output capacitor CO2 may be connected to the second output terminal TO2. The input capacitor CI may be connected to the input terminal on one side and to a reference potential node NG on the other side. The first capacitor CO1 may be connected to the first output terminal TO1 on one side and to the reference potential node NG on the other side. The second capacitor CO2 may be connected to the second output terminal TO2 on one side and to the reference potential node NG on the other side.

The converter 1110 may also comprise a power stage 111 and a controller 1112.

The configuration of the power stage 111 may be identical to that of another power stage according to an embodiment described with reference to FIGs. 1 to 9. Here, some of the descriptions of the power stage 111 are omitted.

Between a first output terminal TO1 and a second output terminal TO2 of the power stage 111, a first load 10 may be disposed. In addition, between the first output terminal TO1 and the reference potential node NG, a second load 20 may be disposed.

The second load 20, for example, may be supplied with a driving voltage known as AVDD. AVDD may be supplied to an analog-to-digital converter (ADC) or other analog circuitry parts. For the sake of understanding, the description will be provided regarding a case where AVDD is supplied to the second load 20. However, the present disclosure is not limited thereto.

The controller 1112 may generate gate control signals SGs by sensing an input voltage VIN, a voltage AVDD supplied to the second load 20, a voltage VOUTP supplied to the first load 10, or a current of an inductor and using them. For such control, control blocks, each comprising a voltage control loop and/or a current control loop, which are generally used in a converter, may be used.

The first output terminal TO1 may have a potential higher than that of the reference potential node NG, and the second output terminal TO2 may have a potential lower than that of the reference potential node NG. For example, a first output terminal voltage VTO1 may be positive, and a second output terminal voltage VTO2 may be negative.

The controller 1112 may operate in two modes. The controller 1112 may determine the conversion between a first mode and a second mode based on a difference between currents IOUT, IAVDD consumed by the first load 10 and the second load 20. The controller 1112 may operate in the first mode when the current IAVDD of the second load 20 is N (N is a natural number equal to or greater than 2) times greater than the current IOUT of the first load 10, and in other cases, may operate in the second mode. For example, the controller 1112 may operate in the first mode when the current IAVDD of the second load 20 is greater than the current IOUT of the first load 10 by a factor of three or more, and may operate in the second mode when less than three.

The operations in the second mode may be identical to the operations described with reference to FIGs. 1 to 9. Some descriptions of the operations in the second mode are omitted here.

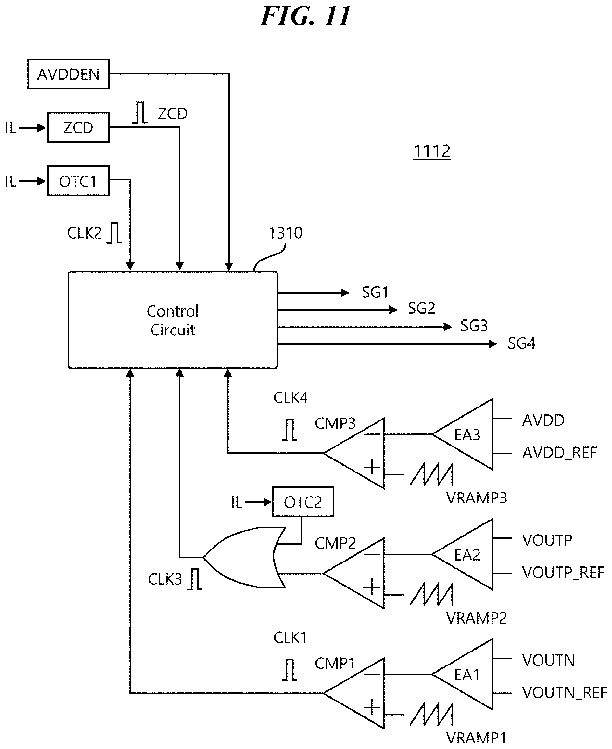

FIG. 11 is a configuration diagram of a controller according to another embodiment.

Referring to FIG. 11, the controller 1112 may comprise a control circuit 1310, and the control circuit 1310 may output gate control signals SG1, SG2, SG3, SG4.

The control circuit 1310, in the first mode, may determine on-times of the first switch and the second switch based on the voltage AVDD of the second load, determine on-times of the third switch and the fourth switch based on the voltage - for example, VOUTP - of the first load or the inductor current IL, and control the on/off states of the switches such that the on-periods of the first switch and the third switch do not overlap with each other, and the on-periods of the second switch and the fourth switch do not overlap with each other.

The control circuit 1310, in the second mode, may determine the on-time of the first switch based on the voltage - for example, VOUTN - of the second output terminal, determine the on-time of the second switch based on the inductor current IL, determine the on-time of the third switch based on the voltage - for example, VOUTP - of the first output terminal, and control the on/off states of the switches such that the on-periods of the first switch and the third switch do not overlap with each other, and the on-periods of the second switch and the fourth switch do not overlap with each other.

In the first mode, the control circuit 1310 may control the on/off states of the switches based on the third clock CLK3, the fourth clock CLK4, and the ZCD signal ZCD.

The controller 1112 may generate a first signal by comparing an error signal, generated by a difference between a voltage of the first load - for example, VOUTP - and a reference voltage of the first load - for example, VOUTP_REF -, with a triangle wave, generate a second signal when the level of the inductor current IL reaches a predetermined value, and generate the third clock CLK3 by performing an OR operation on the first signal and the second signal. Then, the controller 1112 may turn on the third switch and the fourth switch according to an edge signal of the third clock CLK3.

The controller 1112 may generate the fourth clock CLK4 by comparing an error signal, generated by a difference between a voltage of the second load AVDD and a reference voltage of the second load AVDD_REF, with a triangle wave. Then, the controller 1112 may turn on the first switch and the second switch according to an edge signal of the fourth clock CLK4.

The controller 1112, in the first mode, may also operate the first switch and the second switch to be synchronized with each other, and the third switch and the fourth switch to be synchronized with each other.

The controller 1112 may switch the modes based on a difference in the currents or the power consumed by the first load and the second load. A mode switching signal AVDDEN may be received from an external component or be generated in an internal circuit.

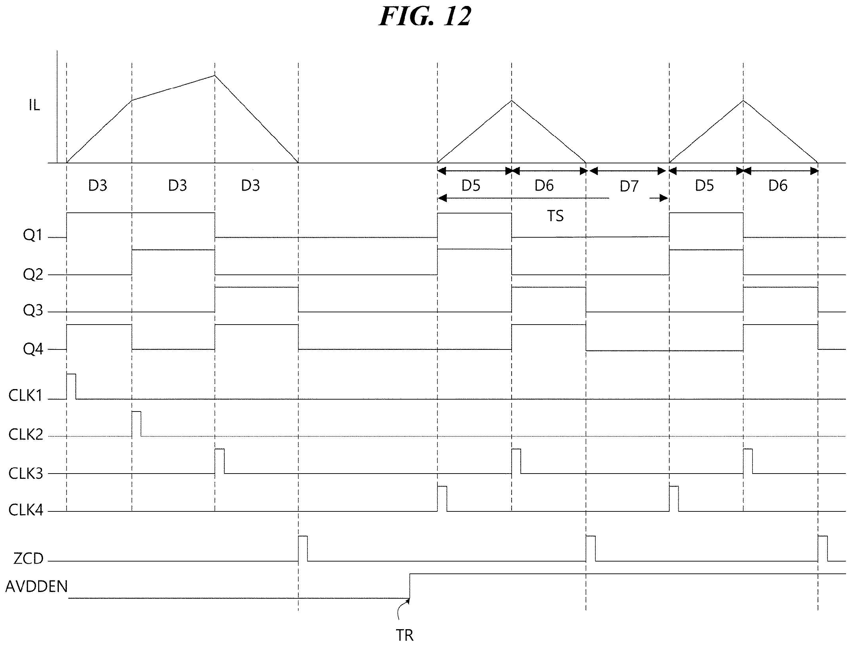

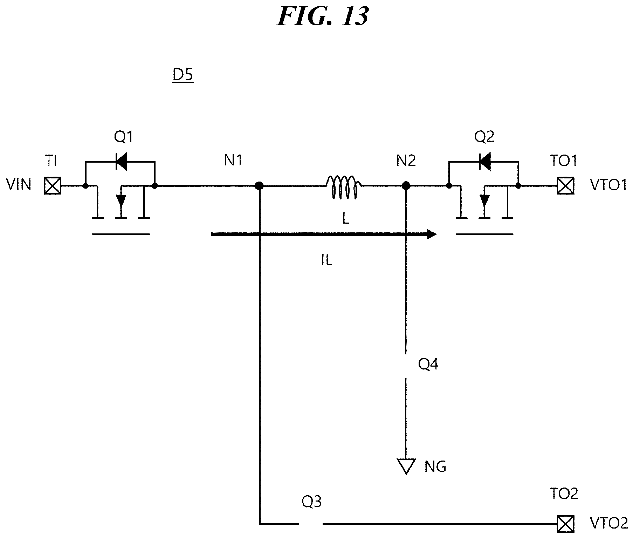

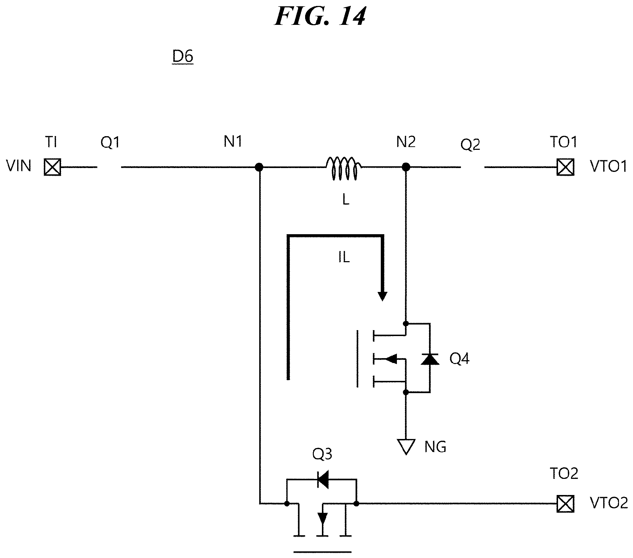

FIG. 12 is a diagram illustrating waveforms of clocks, switches, and inductor current when a converter according to another embodiment operates. FIG. 13 and FIG. 14 are diagrams illustrating the states of respective switches and current paths at respective steps in an example shown in FIG. 12.

Referring to FIGs. 12 to 14, when the level of the mode switching signal AVDDEN is changed at one transition timing TR, the controller may switch the operating mode. Referring to FIG. 12, the controller operates in the second mode before the one transition timing TR, and operates in the first mode after the one transition timing TR.

In the first mode, one switching period TS may comprise three steps, which are a fifth step D5, a sixth step D6, and a seventh step D7.

In the fifth step D5, the first switch Q1 and the second switch Q2 may be turned on according to a rising edge signal of the fourth clock CLK4. The third switch Q3, controlled such that its on-period does not overlap with that of the first switch Q1, may remain in an off state, and the fourth switch Q4, controlled such that its on-period does not overlap with that of the second switch Q2, may also remain in an off state.

In the fifth step D5, the input voltage VIN may be generated at the first node N1, and the first output terminal voltage VTO1 may be generated at the second node N2. At this moment, the inductor current IL may build up.

In the sixth step D6, the third switch Q3 and the fourth switch Q4 may be turned on according to a rising edge signal of the third clock CLK3. The first switch Q1, controlled such that its on-period does not overlap with that of the third switch Q3, may remain in an off state, and the second switch Q2, controlled such that its on-period does not overlap with that of the fourth switch Q4, may also remain in an off state.

In the sixth step D6, the second output terminal voltage VTO2 may be generated at the first node N1, and a reference potential voltage may be generated at the second node N2. Accordingly, the inductor current IL may decrease.

In the seventh step D7, the third switch Q3 may be turned off according to the ZCD signal ZCD, and the fourth switch Q4 may also be turned off. The first switch Q1 may remain in an off state, and the second switch Q2 may remain in an off state. In this case, no current may flow into the inductor L.

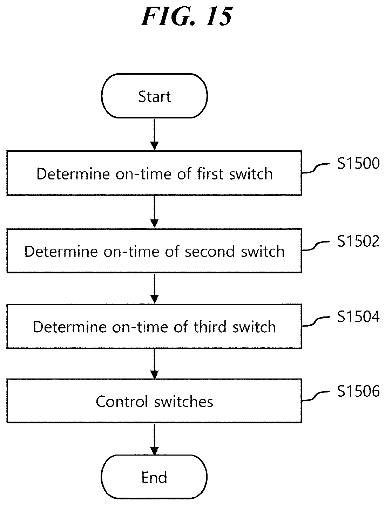

FIG. 15 is a flow diagram of a method for controlling a converter according to an embodiment.

A power stage of a converter may comprise four switches and one inductor. The converter may convert one input voltage to generate a first output voltage and a second output voltage. The internal configuration of the power stage may be identical to that of the above-described power stage.

In this case, the determination of the on-time and the off-time of each switch may be important in the control of the converter. The converter according to an embodiment may determine the on-time of the first switch based on the second output voltage (S1500).

The converter may determine the on-time of the second switch based on the inductor current (S1502).

The converter may also determine the on-time of the third switch based on the first output voltage (S1504).

In addition, the converter may control the on/off states of the switches such that the on-periods of the first switch and the third switch do not overlap with each other, and the on-periods of the second switch and the fourth switch do not overlap with each other (S1506).

As described above, the present disclosure enables the configuration of a converter that generates multiple output voltages using a single inductor. The present disclosure also enables a reduction in the size of a solution including a converter and an improvement in the price competitiveness of the solution.

Terms, such as "include", "consist of", or "have" described above, mean that the corresponding component may be present unless otherwise stated. Thus, the terms should be construed that the terms do not exclude other components but may further include other components. All terms, including technical or scientific terms, have the same meaning as commonly understood by those having ordinary skill in the art to which the present disclosure belongs, unless defined otherwise. Generally used terms, such as terms defined in the dictionary, should be interpreted as being consistent with the contextual meaning of the related art and should not be interpreted in an ideal or excessively formal meaning unless explicitly defined in the present disclosure.

The above descriptions merely illustrate the technical idea of the present disclosure. Those having ordinary skill in the art to which the present disclosure belongs may perform various modification and changes within the scope and without departing from the essential characteristics of the present disclosure. Accordingly, the embodiments disclosed in the present disclosure are not intended to limit but to explain the technical idea of the present disclosure. The scope of the technical spirit of the present disclosure is not limited by these embodiments. The scope of protection of the present disclosure should be interpreted by the claims below, and all technical spirits within the scope equivalent to the scope of the claims should be interpreted as being included in the scope of the claims of the present disclosure.

## Claims

1. A buck-boost converter comprising:
a power stage configured to include an inductor that is disposed between a first node and a second node, a first switch that controls connection between the first node and a node where an input voltage is generated, a second switch that controls connection between the second node and a node where a first output voltage is generated, a third switch that controls connection between the first node and a node where a second output voltage is generated, and a fourth switch that controls connection between the second node and a reference potential node; and
a controller configured to determine an on-time of the first switch based on the second output voltage, to determine an on-time of the second switch based on a current of the inductor, to determine an on-time of the third switch based on the first output voltage, and to control on and off states of the switches such that an on-period of the first switch and an on-period of the third switch do not overlap, and an on-period of the second switch and an on-period of the fourth switch do not overlap.

2. The buck-boost converter of claim 1, wherein the controller determines an off-time of the third switch and an off-time of the fourth switch based on a zero current detection (ZCD) signal for a current of the inductor.

3. The buck-boost converter of claim 1, wherein the first output voltage has a potential higher than that of the second output voltage.

4. The buck-boost converter of claim 1, wherein the first output voltage has a potential higher than that of the reference potential node, and the second output voltage has a potential lower than that of the reference potential node.

5. The buck-boost converter of claim 1, wherein the power stage comprises only a single inductor and four switches.

6. The buck-boost converter of claim 1, wherein the controller generates a first clock by comparing an error signal, which is generated by a difference between the second output voltage and a second output reference voltage, with a triangle wave, and turns on the first switch according to an edge signal of the first clock.

7. The buck-boost converter of claim 1, wherein the controller turns on the second switch when the current level of the inductor reaches a predetermined value.

8. The buck-boost converter of claim 1, wherein the controller generates a third clock by comparing an error signal, which is generated by a difference between the first output voltage and a first output reference voltage, with a triangle wave, and turns on the third switch according to an edge signal of the third clock.

9. The buck-boost converter of claim 1, wherein the controller generates a first signal by comparing an error signal, which is generated by a difference between the first output voltage and a first output reference voltage, with a triangle wave, generates a second signal when the current level of the inductor reaches a predetermined value, generates a third clock by performing an OR operation on the first signal and the second signal, and turns on the third switch according to an edge signal of the third clock.

10. The buck-boost converter of claim 1, wherein, during one switching period, the first switch, the second switch, and the third switch are turned on in that order.

11. A buck-boost converter comprising:
a power stage configured to include an inductor disposed between a first node and a second node, a first switch that controls connection between the first node and an input terminal, a second switch that controls connection between the second node and a first output terminal, a third switch that controls connection between the first node and a second output terminal, and a fourth switch that controls connection between the second node and a reference potential node, a first load disposed between the first output terminal and the second output terminal, and a second load disposed between the first output terminal and the reference potential node; and
a controller configured, in one mode, to determine an on-time of the first switch and an on-time of the second switch based on a voltage of the second load, to determine an on-time of the third switch and an on-time of the fourth switch based on a voltage of the first load or a current of the inductor, and to control on and off states of the switches such that an on-period of the first switch and an on-period of the third switch do not overlap, and an on-period of the second switch and an on-period of the fourth switch do not overlap.

12. The buck-boost converter of claim 11, wherein the controller determines an off-time of the third switch and an off-time of the fourth switch based on a zero current detection (ZCD) signal for a current of the inductor.

13. The buck-boost converter of claim 11, wherein the controller operates in the one mode when a current of the second load is N times (N is a natural number equal to or greater than 2) higher than a current of the first load.

14. The buck-boost converter of claim 11, wherein the first output terminal has a potential higher than that of the reference potential node, and the second output terminal has a potential lower than that of the reference potential node.

15. The buck-boost converter of claim 11, wherein the controller generates a fourth clock by comparing an error signal, which is generated by a difference between a voltage of the second load and a second load reference voltage, with a triangle wave, and turns on the first switch and the second switch according to an edge signal of the fourth clock.

16. The buck-boost converter of claim 11, wherein the controller generates a first signal by comparing an error signal, which is generated by a difference between a voltage of the first load and a first load reference voltage, with a triangle wave, generates a second signal when the current level of the inductor reaches a predetermined value, generates a third clock by performing an OR operation on the first signal and the second signal, and turns on the third switch and the fourth switch according to an edge signal of the third clock.

17. The buck-boost converter of claim 11, wherein, in another mode, the controller determines the on-time of the first switch based on a voltage of the second output terminal, determines the on-time of the second switch based on a current of the inductor, determines the on-time of the third switch based on a voltage of the first output terminal, and controls on and off states of the switches such that an on-period of the first switch and an on-period of the third switch do not overlap, and an on-period of the second switch and an on-period of the fourth switch do not overlap.

18. The buck-boost converter of claim 17, wherein the controller determines switching between the one mode and the other mode according to a difference between currents or a difference in power consumed by the first load and the second load.

19. The buck-boost converter of claim 11, wherein, in the one mode, the first switch and the second switch operate in synchronization with each other, and the third switch and the fourth switch operate in synchronization with each other.

20. A method for controlling a converter, which comprises an inductor disposed between a first node and a second node, a first switch that controls connection between the first node and a node where an input voltage is generated, a second switch that controls connection between the second node and a node where a first output voltage is generated, a third switch that controls connection between the first node and a node where a second output voltage is generated, and a fourth switch that controls connection between the second node and a reference potential node, comprising the steps of:
determining an on-time of the first switch based on the second output voltage;
determining an on-time of the second switch based on a current of the inductor;
determining an on-time of the third switch based on the first output voltage; and
controlling on and off states of the switches such that an on-period of the first switch and an on-period of the third switch do not overlap, and an on-period of the second switch and an on-period of the fourth switch do not overlap.
